(19) Europäisches Patentamt
European Patent Office
Office européen des brevets

(11) **EP 2 885 361 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **13755997.7**

(22) Anmeldetag: **20.08.2013**

(51) Internationale Patentklassifikation (IPC):
*C09J 7/22* *(2018.01)*   *C09J 7/30* *(2018.01)*
*B32B 5/02* *(2006.01)*   *B32B 7/12* *(2006.01)*
*B32B 27/06* *(2006.01)*   *B32B 27/12* *(2006.01)*
*B32B 27/30* *(2006.01)*   *B32B 27/36* *(2006.01)*

(52) Gemeinsame Patentklassifikation (CPC):
**B32B 5/022; B32B 7/12; B32B 27/065;**
**B32B 27/12; B32B 27/306; B32B 27/36;**
**C09J 7/22; C09J 7/30;** B32B 2274/00;
B32B 2307/712; B32B 2419/00; C09J 2301/208;
C09J 2423/006; C09J 2423/04; C09J 2423/106;
(Forts.)

(86) Internationale Anmeldenummer:
**PCT/EP2013/067296**

(87) Internationale Veröffentlichungsnummer:
**WO 2014/029763 (27.02.2014 Gazette 2014/09)**

(54) **WASSERDICHTE MEMBRAN MIT GUTER HAFTUNG ZU BETON**

WATERPROOF MEMBRANE WITH GOOD ADHESION TO CONCRETE

MEMBRANE ÉTANCHE AVEC BONNE ADHÉRENCE AU BÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2012 EP 12181011**

(43) Veröffentlichungstag der Anmeldung:
**24.06.2015 Patentblatt 2015/26**

(73) Patentinhaber: **Sika Technology AG**
**6340 Baar (CH)**

(72) Erfinder:
• **KNEBEL, Gustl**
**CH-6204 Sempach (CH)**
• **ECKL, Martin**
**CH-8330 Pfäffikon (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
EP-A1- 2 299 005    EP-A1- 2 415 688
WO-A1-01/40395    WO-A1-2011/041263

• J?rgen Schawe: "Auswertung und Interpretation von Peaktemperaturen bei DSC-Kurven: Grundlagen", UserCom, 1 January 2006 (2006-01-01), pages 1-9, XP055389481, Retrieved from the Internet: URL:https://www.mt.com/dam/mt_ext_files/Editorial/Simple/0/peaktemperaturentausercom23ds0609.pdf [retrieved on 2017-07-10]
• Karsten Beutner ET AL: "Polyethylenterephthalate", Römpp online Version 4.0, 1 December 2009 (2009-12-01), pages 1-3, XP055462051, Retrieved from the Internet: URL:https://roempp.thieme.de/roempp4.0/do/data/RD-16-03258 [retrieved on 2018-03-22]

(52) Gemeinsame Patentklassifikation (CPC): (Forts.)
C09J 2429/00; C09J 2431/00; C09J 2433/00;
C09J 2467/00; C09J 2475/00

**Beschreibung**

**Technisches Gebiet**

Die Erfindung betrifft eine wasserdichte Membran, umfassend eine Schottschicht und eine Funktionsschicht. Die Erfindung betrifft ferner ein Verfahren zur Abdichtung von Untergründen sowie ein Verfahren zur Herstellung einer wasserdichten Membran.

**Stand der Technik**

Zur Abdichtung von Untergründen gegen Wasserdurchstoß sind in der Baubranche wasserdichte Membranen bekannt. Beispielsweise beschreibt die US 4,065,924 eine Schottschicht, verbunden mit einer Oberschicht, wobei die Schottschicht auf dem Untergrund angeordnet ist und die Oberschicht den Verbund mit dem aufgetragenen Beton gewährleistet, indem sie von dem aufgetragenen Beton durchsetzt wird.

Nachteil solcher Abdichtungen ist es jedoch, dass sich im Laufe ihrer Verwendung zwischen der Oberschicht und der Schottschicht durch das Ablösen der Schichten voneinander oder durch Materialermüdung Hohlräume bilden können. Durch diese können sich Flüssigkeiten ausbreiten. Im Falle eines Lecks in der Schottschicht, beispielsweise durch hineinwachsende Wurzeln, Materialermüdung oder durch Zugoder Scherkräfte, kann eindringendes Wasser die Schottschicht durch diese zusammenhängenden Hohlräume hinterlaufen. Dadurch werden einerseits große Bereiche von eingedrungenem Wasser betroffen und andererseits die genaue Lokalisierung des Lecks schwierig.

Darüber hinaus ist es aus der US 5,313,848 bekannt, dass der Kontakt mit einem Untergrund, insbesondere einem Betonuntergrund, verbessert werden kann, indem eine Membran, bestehend aus einer Schottschicht, einer darauf aufgebrachten Schicht aus einem synthetischen Klebstoff sowie einer abschließenden Schutzschicht, verwendet wird. Solche Membranen erlauben die Applikation von flüssigem Beton an die Membran und können insbesondere in Applikationen verwendet werden, in denen ein nachträgliches Anbringen an einer gegossenen Betonfläche nicht möglich ist.

In der US 5,496,615 ist eine Weiterentwicklung dieser Membran beschrieben, in der auf der der Zementschicht zugewandten Seite der Trägerschicht eine weitere Klebstoffschicht aufgebracht ist, mit der die Trägerschicht mit dem Beton verbunden werden kann. Diese Membran-Struktur gewährleitstet eine bessere Verbindung mit der Betonschicht.

Nachteil dieser Struktur ist es jedoch, dass vor dem Aufbringen der Betonschicht die Klebstoffschicht mit Staub und anderen partikulärem Material verunreinigt werden kann, insbesondere wenn nach Auslegen der Membran auf dieser Arbeiten verrichtet werden. Dadurch kann deren Klebkraft signifikant reduziert und eine stabile Verbindung der Membran mit dem Beton nicht mehr gewährleisten werden, insbesondere nicht über längere Zeiträume.

Die EP 2 299 005 A1 beschreibt wasserdichte Membranen mit einer Kontaktschicht, die ein Haftmittel und einen Kontaktvermittler aufweist. Als Kontaktvermittler werden speziell Faserwerkstoffe aus natürlichen oder synthetischen Fasern, wie aus Polyethylenterephthalat, vorgeschlagen, die von Beton durchdrungen werden können. Nach Aushärtung des Betons bildet sich durch das Ineinandergreifen des Kontaktvermittlers mit dem Beton ein fest aneinanderhaltender Verbund. In diesem System dient das Haftmittel der Befestigung des Kontaktvermittlers an der Membran.

Die WO 2011/041263 A1 beschreibt eine wasserdichte Membran, die aus einer wasserdichten Schicht, einem darauf aufgebrachten Haftklebstoff und eine Schutzschicht aus Polyvinylacetat besteht. Die Schutzschicht dient in dieser Membran dem Schutz des Haftklebstoffs, so dass die Membran während der Verarbeitung begehbar ist. Wird an die Schutzschicht jedoch Beton gegossen, so hydrolysiert das Polyvinylacetat unter Einfluss des Betons zu Polyvinylalkohol, der im Beton löslich ist. Dadurch wird der unter der Schutzschicht befindliche Haftklebstoff freigelegt, der dann mit dem angegossenen Beton reagieren und einen festen Verbund ausbilden kann.

**Darstellung der Erfindung**

Aufgabe der vorliegenden Erfindung ist es, die wie vorstehend aus dem Stand der Technik bekannte wasserdichte Membran zu verbessern, wobei eine Verunreinigung der auf die Zementschicht aufzubringenden Klebstoffschicht während der Verarbeitung möglichst verhindert wird, und gleichzeitig nach Aufbringen des flüssigen Betons eine stabile Bindung mit der Betonschicht erzielt werden kann.

Erfindungsgemäß wird dies durch die wasserdichte Membran nach Anspruch 1 erreicht.

Kern der Erfindung ist, dass die Funktionsschicht ein thermoplastisches Polymer, das unter dem Einfluss eines stark alkalischen Mediums mit einem pH Wert von 9 bis 14 seine Konsistenz ändert und in Form eines thermoplastischen Copolyester vorliegt, und ein Haftmittel enthält, wobei das Haftmittel zusammen mit dem thermoplastischen Polymer die Funktionsschicht bildet.

Unter stark alkalischem Medium wird ein pH von 9 bis 14, vorzugsweise von 12 bis 13, verstanden.

Das thermoplastische Polymer ändert unter dem Einfluss eines stark alkalischen Mediums seine Konsistenz dergestalt, dass sich eine selbstklebende Wirkung des Haftmittels nach der Änderung der Konsistenz entfalten kann, während dies vor der Konsistenzänderung nicht der Fall ist. Dies kann beispielsweise durch Auflösung des thermoplastischen Polymers in dem stark alkalischen Medium bewirkt werden, was eine Anbindung des Haftmittels beispielsweise an flüssigen Beton erlaubt. Unter selbstklebender Wirkung wird verstanden, dass eine Klebeverbindung ohne Einwirkung von Wärme, Wasser und Lösungsmitteln zur Aktivierung des Klebstoffs stattfindet, d.h. durch die Anwendung von Druck, um den Klebstoff mit dem Substrat in Kontakt zu bringen.

Vorzugsweise ist die Funktionsschicht inert gegen wässrige Lösungen mit einem pH-Wert im sauren bis leicht basischen Bereich (wie beispielsweise Regen), während bei Kontakt mit stark alkalischen Lösungen, wie z.B. flüssigem Beton, eine chemische Reaktion einsetzt, die zur Freisetzung des Haftmittels führt.

Unter saurem bis leicht basischem Bereich wird ein pH-Bereich von 4 bis 8 verstanden.

Die Vorteile der Erfindung sind unter anderem darin zu sehen, dass eine Verarbeitung der erfindungsgemäßen Folien bei widrigen Wetterbedingungen möglich ist, ohne dass die Klebfähigkeit der Membran vermindert wird. Dies verhindert, dass sich beispielsweise Dreck und Staub auf der Kontaktfläche mit dem flüssigen Beton absetzen und die Klebfähigkeit der Membran gegenüber dem Beton reduzieren.

Der Aufbau der Funktionsschicht und deren Form unterliegt dabei keinen besonderen Beschränkungen, Die Funktionsschicht kann in Form einer Folie, einer Beschichtung oder eines Faservlieses vorliegen.

Die Funktionsschicht kann neben dem beschriebenen thermoplastischen Polymer weitere Komponenten mit niedrigem Schmelzpunkt enthalten, beispielsweise zusätzliche Thermoplaste, die zu einer Absenkung des Schmelzpunkts führen, Füllstoffe, oder Betonbestandteile, die die Anbindung an den Beton verbessern.

Weitere Aspekte der Erfindung betreffen Verfahren zur Abdichtung von Untergründen sowie Verfahren zur Herstellung der beschriebenen Membranen. Besonders bevorzugte Ausführungsformen der Erfindung sind Gegenstand der abhängigen Ansprüche.

**Wege zur Ausführung der Erfindung**

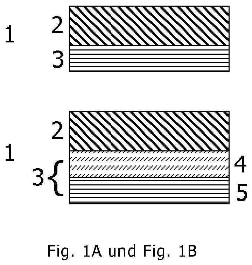

In Fig. 1A ist eine erfindungsgemäße wasserdichte Membran 1 dargestellt, umfassend eine Schottschicht 2 und eine Funktionsschicht 3, wobei die Funktionsschicht ein thermoplastisches Polymer enthält, das unter dem Einfluss von stark alkalischen Medien seine Konsistenz ändert, und ein Haftmittel enthält.

In Fig. 1B ist eine erfindungsgemäße Membran 1 dargestellt, die zwischen der Schottschicht 2 und einer Schicht aus einem thermoplastischen Polymer 5 eine Schicht aus einem Haftmittel 4 aufweist, wobei die Schicht aus dem Haftmittel mit dem thermoplastischen Polymer zusammen die Funktionsschicht 3 ausbilden und die die Schottschicht mit der Funktionsschicht verbindet.

Unter einem "niedrigen Schmelzpunkt" wird im Zusammenhang mit Polymeren im Rahmen der vorliegenden Erfindung eine Schmelztemperatur im Bereich von 50 bis 190°C verstanden.

Die Schottschicht 2 besteht vorzugsweise aus einem Material, das auch bei hohen Flüssigkeitsdrücken eine ausreichende Dichtheit gewährleistet.

Es ist demzufolge von Vorteil, wenn die Schottschicht 2 eine hohe Beständigkeit gegen Wasserdruck aufweist sowie gute Werte in Weiterreißversuchen und Perforationsversuchen zeigt, was besonders bei mechanischen Belastungen auf Baustellen von Vorteil ist.

Es ist insbesondere von Vorteil, wenn die Schottschicht 2 eine thermoplastische Schicht, vorzugsweise eine Schicht aus thermoplastischen Polyolefinen oder Polyvinylchlorid (PVC), insbesondere eine Schicht aus Polypropylen (PP) oder Polyethylen (PE), insbesondere bevorzugt aus Polypropylen, umfasst, da diese Materialien eine hohe Widerstandsfähigkeit gegenüber Umwelteinflüssen gewährleisten.

Erfindungsgemäss ist die Schottschicht 2 ausgewählt aus Materialien aus der Gruppe bestehend aus Polyethylen mit hoher Dichte (HDPE), Polyethylen mit mittlerer Dichte (MDPE), Polyethylen mit niedriger Dichte (LDPE), Polyethylen (PE), Polyethylenterephthalat (PET), Polystyrol (PS), Polyvinylchlorid (PVC), Polyamiden (PA), Ethylen/Vinylacetat-Copolymer (EVA), chlorsulfoniertes Polyethylen, thermoplastische Elastomere auf Olefinbasis (TPE-O, TPO), Ethylen-Propylen-Dien-Kautschuk (EPDM) und Mischungen davon.

Die Schottschicht 2 kann eine Dicke von 0,05 - 2 mm, bevorzugt 0,07 - 1.5 mm, insbesondere 0,08 - 1.2 mm, aufweisen.

Es ist insbesondere von Vorteil, wenn die Schottschicht 2 eine flexible Kunststoffschicht ist. Dadurch lässt sich die wasserdichte Membran 1, typischerweise bei der Herstellung, zu Rollen aufwickeln und leicht auf einem Untergrund anbringen.

Die Funktionsschicht 3 hat vorzugsweise die Form einer Folie, einer Beschichtung oder eines Faservlies, in dem die Fasern einen harten Kern umfassen, der von einer Schicht aus dem thermoplastischen Polymer umgeben ist.

Thermoplastische Polymere, die unter Einfluss stark alkalischer Medien ihre Konsistenz ändern, sind dem Fachmann geläufig. Ein Beispiel für solche Polymere sind Polyvinylalkohole, die sich unter dem Einfluss von wässrigen Medien teilweise auflösen. Solche Vinylalkohole werden beispielsweise für die Herstellung von sogenannten "soluble bags" für die Verpackung von Betonadditiven eingesetzt, da diese "soluble bags" direkt in Betonmischungen zugegeben werden können. Nach Auflösung der Polyvinylalkoholfolie vermischen sich die darin enthaltenen Betonadditive mit dem Beton.

Ein weiteres Beispiel für Polymere, die unter stark alkalischen Bedingungen ihre Konsistenz ändern, sind Copolyester, da die Esterfunktionalität dieser Polymere in stark alkalischen Medien hydrolysiert werden und die Polymere damit zerfallen.

Ein weiteres Beispiel für Polymere, die unter Einfluss stark alkalischer Medien ihre Konsistenz ändern, sind Polyvinylacetate und Copolymere hiervon, da die Vinylacetateinheiten innerhalb der Polymere in stark alkalischen Medien einer Hydrolyse unterliegen und so in Polyvinylalkohole umgewandelt werden. Diese sind wiederum gut in Wasser löslich, so dass sich der das Polymer insgesamt in dem stark alkylischen Medium auflöst.

Erfindungsgemäss kommt als thermoplastisches Polymer, das unter dem Einfluss stark alkalischer Medien seine Konsistenz verändert, ein thermoplastischer Copolyester zum Einsatz. Ein bevorzugter thermoplastischer Copolyester basiert auf Copolyethylenterephthalat.

Als Polyvinylalkohole sind beispielsweise solche mit einem Hydrolysegrad von über 50 Mol-% (d.h. 50,1 bis 100 Mol-%, insbesondere 70 bis 100 Mol-%), bevorzugt 85 bis 100 Mol-%, und insbesondere 90 bis 100 Mol-% geeignet. Entsprechende Polymere sind beispielsweise in der DE 10 2007 026 166 A1 beschrieben. Dabei gibt der Hydrolysegrad (Verseifungsgrad) an, wie viel Prozent eines Polyvinylacetatgrundmoleküls zu Polyvinylalkohol verseift wurden. Aus dem Gehalt an Restacetylgruppen und damit aus der Esterzahl (EZ) wird der Hydrolysegrad H nachfolgender Formel berechnet und in Mol-% angegeben:

$$H = 100 \times (100 - 0{,}1535 \times EZ)/(100 - 0{,}0749 \times EZ).$$

Das Polyvinylalkoholpolymer liegt vorzugsweise in einer Form vor, dass sich das Polymer unter Einwirkung von neutralem Wasser und bei Raumtemperatur nicht auflöst, sondern erst bei etwas erhöhter Temperatur und bei Einwirkung von alkalischen Medien. Demzufolge ist es vorteilhaft, wenn der Polyvinylalkohol nicht in vollständig hydrolysierter Form vorliegt.

Hinsichtlich der Copolymeren von Vinylacetat ist es entscheidend, dass diese keinen zu hohen Anteil an unpolaren Monomeren, wie beispielsweise Ethylen, enthalten. Ein zu hoher Anteil solcher unpolaren Monomere würde dazu führen, dass bei Kontakt mit flüssigem Beton keine wesentliche Änderung der Konsistenz des Materials eintritt, beispielsweise weil sich zu viele unpolare Seitengruppen an der Oberfläche des Materials befinden, während die Vinylacetateinheiten von einem Kontakt mit dem Beton abgeschirmt sind. So sind beispielsweise Ethylen-Vinylacetat-Copolymere mit Vinylacetatgehalten im Bereich von 5 bis 40 Mol% Vinylacetat nicht als thermoplastisches Polymer, das unter Einfluss von stark alkalischen Medien seine Konsistenz ändert, geeignet, weil eine partielle Hydrolyse die Eigenschaften des Polymers nicht so wesentlich verändert, dass das Polymer im wässrigen Medium gelöst werden könnte. Im Rahmen der vorliegenden Erfindung sind daher als Copolymere von Vinylacetat nur solche geeignet, die einen Anteil an unpolaren Monomeren von maximal 50 Mol%, bezogen auf die Gesamtmolmenge aller Monomeren im Polymer, enthalten. Bevorzugt beträgt der Anteil unpolarer Monomere nicht mehr als 30 Mol%, noch bevorzugter nicht mehr als 20 Mol% und ganz besonders bevorzugt nicht mehr als 10 Mol%. Unter unpolaren Monomeren werden im Rahmen der vorliegenden Erfindung unter anderem Monomere verstanden, die auf Kohlenwasserstoffen beruhen.

Es ist selbstverständlich, dass es zwischen dem thermoplastischen Polymer, das unter Einfluss von stark alkalischen Medien seine Konsistenz ändert, und dem Material, dass die Schottschicht bildet, keine Überschneidungen bestehen, da das Material, dass die Schottschicht bildet, bei versehentlichem Kontakt mit Beton nicht beschädigt werden darf. Daher sind als Material für die Schottschicht solche Polymere bevorzugt, die gegenüber stark alkalischen Medien innert sind.

Am meisten bevorzugt als thermoplastische Polymere, die unter Einfluss von stark alkalischen Medien ihre Konsistenz ändern, sind thermoplastische Copolyester, wie beispielsweise solche auf Basis von Polyethylenterephtalat. Gegenüber Polyvinylacetat oder Copolymeren davon besteht bei diesem Polymertyp der Vorteil, dass eine Hydrolyse innerhalb der Seitenkette des Polymers erfolgt, während bei Polyvinylacetat nur die Seitenketten des Polymers hydrolysiert werden. Damit ist es bei Copolyestern möglich mit einer relativ geringen Anzahl an Hydroylsen eine sehr wesentliche Konsistenzänderung zu erzielen, während dazu bei Polyvinylacetat eine im Wesentlichen vollständige Hydrolyse der Acetatgruppen erforderlich ist.

Im Rahmen der vorliegenden Erfindung ist es ebenfalls bevorzugt, wenn das thermoplastische Polymer einen niedrigen Schmelzpunkt im Sinne der vorstehenden Definition aufweist. Besonders bevorzugt ist es, wenn das thermoplastische Polymer einen Schmelzpunkt im Bereich von 60 bis 120 °C und insbesondere 70 bis 90 °C aufweist.

Die Funktionsschicht kann neben dem thermoplastischen Polymer ein zusätzliches weiteres thermoplastisches Polymer enthalten. Dieses zusätzliche Polymer muss in stark alkalischen Medien nicht notwendigerweise seine Konsistenz ändern, und es ist sogar bevorzugt wenn dies nicht der Fall ist. Vorteilhafterweise ist dieses ein temperaturfester Thermoplast oder ein bei Raumtemperatur festes thermoplastisches Elastomer. Unter dem Begriff *"Raumtemperatur"* wird im vorliegenden Dokument eine Temperatur von 23°C verstanden. Vorteilhafterweise umfasst das thermoplastische Polymer ein Polymer, ausgewählt aus der Gruppe, bestehend aus a) Ethylen/Alkylacrylatcopolymeren, bevorzugt Ethylen/Methylacrylat-, Ethylen/Ethylacrylat- oder Ethylen/N-Butylacrylatcopolymeren, b) Polyethylenen, vorzugsweise hergestellt nach dem Metallocenverfahren, besonders bevorzugt Copolymere von Ethylen und Octen oder Ethylen und Hexen und c) Ethylenvinylacetat (EVA). In einer besonders bevorzugten Ausführungsform handelt es sich bei dem zusätzlichen thermoplastischen Polymer um Ethylenvinylacetat (EVA), das einerseits zur Absenkung des Schmelzpunktes des Copolyesterpolymers in der Funktionsschicht verwendet werden kann und andererseits eine Verminderung der Klebrigkeit bewirkt. In einer weiteren besonders bevorzugten Ausführungsform handelt es sich bei dem zusätzlichen thermoplastischen Polymer um ein Ethylen/Methylacrylat, Ethylen/Ethylacrylat oder Ethylen/N-Butylacrylatcopolymeren. Diese Copolymere wirken, indem sie den Schmelzpunkt des Polymers in der Funktionsschicht (3) vermindern und somit die Klebrigkeit der Funktionsschicht herabsetzen.

Die Menge solcher zusätzlichen thermoplastischen Polymeren sollte ausreichend sein, um den gewünschten Effekt zu bewirken, nicht jedoch so groß sein, dass die Eigenschaft der Konsistenzänderung in stark alkalischen Medien beeinträchtigt wird. Dies ist insbesondere dann kritisch, wenn das zusätzliche thermoplastische Polymer in stark alkalischen Medien seine Konsistenz nicht ändert. Es ist demzufolge zweckmäßig, wenn der Anteil von zusätzlichen thermoplastischen Polymeren, die ihre Konsistenz in stark alkalischen Medien nicht ändern, 40 Gew.-%, bezogen auf das Gesamtgewicht der thermoplastischen Polymeren, nicht übersteigt. Vorzugsweise beträgt der Anteil der zusätzlichen thermoplastischen Polymeren nicht mehr als 30 Gew.-%, besonders bevorzugt nicht mehr als 20 Gew.-% und am meisten bevorzugt nicht mehr als 10 Gew.-%.

Wie vorstehend beschrieben, enthält die Funktionsschicht neben dem thermoplastischen Polymer ein Haftmittel. Erfindungsgemäss bildet das Haftmittel zusammen mit dem thermoplastischen Polymer die Funktionsschicht 3, wobei das Haftmittel mit dem thermoplastischen Polymer vorzugsweise derart vermischt ist, dass es in der Vermischung keine selbstklebende Wirkung aufweist. Bei dem Haftmittel handelt kann es sich um einen bei Raumtemperatur festen Thermoplast oder ein bei Raumtemperatur festes thermoplastisches Elastomer handeln. Thermoplastische Elastomere haben den Vorteil, dass das Haftmittel dadurch über eine gute Elastizität gegenüber Horizontal- und Vertikalverschiebungen, insbesondere gegenüber Verschiebungen der Schottschicht 2 gegenüber der Funktionsschicht 3 verfügt. Eine gute Elastizität des Haftmittels verhindert ein Reißen oder Ablösen der Schichten und somit ein Versagen des Haftmittels. Idealerweise weist das Haftmittel eine Reißfestigkeit $\sigma_B$ von 1,5 - 20 MPa bei Raumtemperatur auf und/oder eine Reißdehnung $\varepsilon_R$ von 5 - 1000 %, beide gemessen nach DIN ISO 527-1 von 1996.

Bevorzugte Thermoplaste und thermoplastische Elastomere sind insbesondere ausgewählt aus der Gruppe bestehend aus Polyethylen (PE), Polyethylen mit niedriger Dichte (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU) wie TPU mit aromatischen Hartsegmenten und Polyester-Weichsegmenten (TPU-ARES), Polyether-Weichsegmenten (TPU-ARET), Polyester- und Polyether-Weichsegmenten (TPU-AREE) oder Polycarbonat-Weichsegmenten (TPU-ARCE); thermoplastische Copolyester (TPE-E, TPC) wie TPC mit Polyester-Weichsegmenten (TPC-ES), Polyether-Weichsegmenten (TPC-ET) oder mit Polyester- und Polyether-Weichsegmenten (TPC-EE); Styrol-Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymer (TPS-SEBS), Styrol/Ethylen-Propylen/Styrol-Block-Copolymer (TPS-SEPS); und thermoplastische Copolyamide (TPE-A, TPA).

Weitere vorteilhafte Haftmittel können ausgewählt sein aus der Gruppe bestehend aus Acrylatverbindungen, Polyurethanpolymeren, Silan-terminierten Polymeren und Polyolefinen.

Bevorzugte Acrylatverbindungen sind insbesondere Acrylatverbindungen auf Basis von Acryl-Monomeren, insbesondere von Acryl- und Methacrylsäureestern.

Der Begriff *"Polyurethanpolymer"* umfasst sämtliche Polymere, welche nach dem so genannten Diisocyanat-Polyadditions-Verfahren hergestellt werden. Dies schließt auch solche Polymere ein, die nahezu oder gänzlich frei von Urethangruppen sind. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Wie vorstehend erwähnt, ist es weiterhin von Vorteil, wenn das Haftmittel ein Schmelzklebstoff ist. Dies gewährleistet einen guten Verbund und eine gute Haftung des Haftmittels auf der Schottschicht 2, respektive auf möglichen weiteren Komponenten der wasserdichten Membran, und vermindert somit das Ablösen des Haftmittels.

Schmelzklebstoffe sind dem Fachmann allgemein bekannt und sind beispielsweise beschrieben in CD Römpp Chemie Lexikon, Version 1.0, Georg Thieme Verlag, Stuttgart, 1995 .

Des Weiteren ist es von Vorteil, wenn das Haftmittel einen Schmelzpunkt (bestimmt nach der Ring & Kugel-Methode) von 50 - 190°C, insbesondere von 60 - 120°C, bevorzugt von 70 - 90°C, aufweist. Dies ist insbesondere für die Herstellung von wasserdichten Membranen 1 vorteilhaft, bei denen Materialien für die Schottschicht 2 verwendet werden, die bei hohen Herstellungstemperaturen in Mitleidenschaft gezogen werden.

Neben dem thermoplastischen Polymer, dem Haftmittel und den optionalen weiteren thermoplastischen Polymeren kann die Funktionsschicht weitere Komponenten enthalten, insbesondere Betonbestandteile und/oder Mörtelbestandteile. Als Betonbestandteile und/oder Mörtelbestandteile sind prinzipiell alle Stoffe, die für die Herstellung von Beton und/oder Mörtel verwendet werden, geeignet, insbesondere Zementpartikel. Als Betonbestandteile und/oder Mörtelbestandteile sind beispielsweise Zusatzstoffe wie Kies oder Sand, Bindemittel, wie nichthydraulische, latent hydraulische puzzolanische oder hydraulische Bindemittel geeignet. Durch diese Zusatzstoffe kann die Verbindung der wasserdichten Membran mit dem angegossenen Beton in seiner ausgehärteten Form verbessert werden. Bevorzugt als Betonbestandteile und/oder Mörtelbestandteile sind hydraulische Bindemittel, welche vorzugsweise ausgewählt sind aus der Gruppe, bestehend aus Zement, Mörtel, Gips, Silikafume, Flugasche und Hüttensand, Aluminiumoxidtrihydrat, Siliziumdioxid, Alkali- oder Erdalkalimetallsalze oder eine Mischung davon. Die Betonbestandteile haben typischerweise eine durchschnittliche Partikelgröße von 0,1 - 1000 $\mu$m, bevorzugt von 2 bis 500 $\mu$m.

Die Funktionsschicht in der wasserdichten Membran kann in Form einer Folie aus dem Polymer und dem Haftmittel, in Form einer Beschichtung aus dem Polymer und dem Haftmittel oder in Form eines Faservlieses vorliegen, in dem die Fasern einen harten Kern umfassen, der von einer Schicht aus dem Polymer und dem Haftmittel umgeben ist.

Liegt die Funktionsschicht in Form einer Folie oder Beschichtung vor, so ist es ebenfalls möglich, dass es sich bei der Folie oder der Beschichtung um ein geschäumtes Material handelt. Dies hat den Vorteil, dass sich damit die Widerstandsfähigkeit des Materials gegenüber stoßartigen Belastungen verbessern lässt.

Liegt die Funktionsschicht in Form einer Folie vor, so weist diese Folie zweckmäßig eine Dicke im Bereich von 0,05 bis 1 mm, insbesondere 0,07 bis 0,9 mm und besonders bevorzugt 0,1 bis 0,7 mm, auf. Liegt die Funktionsschicht hingegen in Form einer Beschichtung vor, so wird diese Beschichtung mit einem Auftragsgewicht im Bereich von 10 bis 500 g/m², insbesondere im Bereich von 50 bis 300 g/m², aufgetragen. Für die weitere Alternative, dass die Funktionsschicht in Form eines Vlieses vorliegt, weist dieses zweckmäßig ein Flächengewicht im Bereich von 10 bis 500 g/m², und insbesondere im Bereich von 20 bis 300 g/m², auf.

Dem Fachmann ist ersichtlich, dass sich die exakte Dicke der in die Membran einzubeziehenden Folie, Beschichtung oder des Vlieses auch danach richtet, ob die Membran eine zweilagige Konstruktion (ohne Mittelschicht aus Haftmittel zwischen der Schottschicht und der Funktionssschicht), eine dreilagige Konstruktion mit einer Haftschicht zwischen Schottschicht und Funktionsschicht oder eine Konstruktion mit mehr als drei Schichten aufweist. In besonders bevorzugten Ausführungsformen handelt es sich bei der erfindungsgemäßen Membran um eine zweilagige oder dreilagige Membran.

Im Fall einer zweilagigen Konstruktion ist es bevorzugt, dass die Folie eine Dicke im Bereich von 0,2 bis 0,7 mm, insbesondere von 0,4 bis 0,6 mm, aufweist. Handelt es sich bei der Funktionssschicht um eine Beschichtung, so ist es bevorzugt, dass diese mit einem Auftragsgewicht im Bereich von zwischen 150 und 350 g/m², insbesondere zwischen 200 und 300 g/m², aufgetragen wird. Bei Verwendung eines Vlieses als Funktionsschicht beträgt das Flächengewicht bei zweilagiger Konstruktion vorzugsweise 150 bis 350 g/m², und insbesondere 200 bis 300 g/m².

Liegt eine dreilagige Konstruktion vor, kann die Dicke der Funktionsschicht geringer sein als bei einer zweilagigen Konstruktion. Vorzugsweise liegt die Dicke der Funktionsschicht, wenn diese aus einer Folie besteht, im Bereich zwischen 0,1 bis 0,4 mm, insbesondere zwischen 0,15 und 0,3 mm. Im Fall einer Beschichtung kann das Auftragsgewicht auf eine Menge im Bereich von 50 bis 200 g/m², insbesondere im Bereich von 80 bis 150 g/m², reduziert werden. Bei einem Vlies ist es ausreichend, wenn das Flächengewicht des Vlieses zwischen 10 und 120 g/m², insbesondere zwischen 30 bis 80 g/m², beträgt.

Die dem Vlies zugrunde liegenden Fasern bestehen aus organischem oder synthetischem Material. Insbesondere handelt es sich um Cellulose-Baumwollfasern, Proteinfasern oder um synthetische Fasern. Als synthetische Fasern sind vor allem Fasern aus Polyester oder aus einem Homo- oder Copolymeren von Ethylen und/oder Propylen, aus einem Polyamid oder aus Viskose bevorzugt. Die Fasern können hierbei Kurzfasern oder Langfasern, gesponnene, gewebte oder ungewebte Fasern oder Filamente sein. Weiterhin können die Fasern gerichtete oder gestreckte Fasern sein. Ferner kann es vorteilhaft sein, unterschiedliche Fasern sowohl in Geometrie als auch Zusammensetzungen, miteinander zu verwenden.

Das aus Fasern aufgebaute Vlies kann mit verschiedenen, dem Fachmann bekannten Verfahren hergestellt werden. So werden in der Regel zunächst die Matrixfasern (aus einem festen Material) erzeugt, auf die anschließend eine Schicht aus dem thermoplastischen Copolyester aufgebracht wird. Solche Fasern sind dem Fachmann auch unter der Bezeichnung *"Biko"(für* Bi-Komponenten)-Fasern geläufig.

Das Vlies umfasst Zwischenräume, die durch geeignete Herstellungsverfahren erzeugt werden können. Vorzugsweise sind die Zwischenräume zumindest teilweise offen und erlauben das Eindringen von flüssigem Beton und/oder von Haftmittel.

Es ist weiterhin möglich, dass die wasserdichte Membran im Rahmen der Erfindung zusätzliche funktionelle Schichten, insbesondere Schichten aus quellfähigen Materialien und elektrisch leitfähigen Materialien enthält, wie sie in der EP 2 299 005 A1 in [0057], [0058] und [0059] bis [0063] beschrieben sind.

Des Weiteren umfasst die Erfindung ein Verfahren zur Abdichtung von Untergründen, umfassend die Schritte i) Aufbringen einer wasserdichten Membran (1), wie vorstehend ausgeführt, auf einen Untergrund, wobei die Funktionsschicht der wasserdichten Membran entgegen dem Untergrund gerichtet ist, und ii) Aufbringen von flüssigem Beton auf die Funktionsschicht (3) der wasserdichten Membran (1). Unter *"flüssigem Beton"* wird in diesem Dokument Beton vor dem Aushärten verstanden. Der Beton kann Teil eines Bauwerk, insbesondere eines Bauwerk aus dem Hochoder Tiefbau, wie beispielsweise einem Gebäude, Garage, Tunnel, Deponie, Wasserrückhaltebecken, Deich oder ein Element für den Fertigteilbau sein.

Der flüssige Beton wird üblicherweise auf und/oder an die Funktionsschicht gegossen, und kann mit der Funktionsschicht reagieren. Handelt es sich bei der Funktionsschicht um ein Faservlies, ist es von Vorteil, wenn der flüssige Beton die Funktionsschicht vollständig durchsetzt. Bei dem Aushärten des Betons bildet sich dabei typischerweise ein im Wesentlichen fester Verbund zwischen dem ausgehärteten Beton und der Funktionsschicht und somit zu der wasserdichten Membran 1, insbesondere wenn der Beton in seinem flüssigen Zustand die Funktionsschicht vollständig durchsetzt hat. Dieser Verbund wird zusätzlich durch die Ausbildung einer selbstklebenden Wirkung durch den Kontakt des Vlieses mit dem flüssigen Beton verstärkt.

So wird beim Inkontakttreten des flüssigen Betons mit der Funktionsschicht durch den stark alkalischen pH-Wert des Betons eine chemische Reaktion mit dem thermoplastischen Polymer ausgelöst, die zu einem Abbau des Polymers oder einem Auflösen des Polymers führt und so das Haftmittel aus der Funktionsschicht freigibt. Dieses Haftmittel weist in freier Form eine selbstklebende Wirkung auf und kann damit eine starke Haftung zwischen der Funktionsschicht und dem ausgehärteten Beton gewährleisten.

Des Weiteren umfasst die Erfindung ein Verfahren zur Herstellung von wasserdichten Membranen, wie sie vorstehend beschrieben sind, wobei das Verfahren das Aufbringen einer Funktionsschicht auf eine Schottschicht beinhaltet. Handelt es sich bei der Funktionsschicht um eine Folie, so kann das Aufbringen auf die Schottschicht oder auf eine dazwischen eingeführte Haftmittelschicht vorzugsweise durch Laminieren oder Kaschieren, insbesondere durch Kaschieren, auf die Schottschicht erfolgen. Handelt es sich bei der Funktionsschicht um eine Beschichtung, so kann diese zweckmäßig durch Schmelzdüsenextrusion, Schmelzkalandrierung, Pulverstreuverfahren oder Sprühkaschierung auf die Schottschicht oder auf eine auf der Schottschicht aufgebrachten Haftmittelschicht aufgebracht werden.

Die Herstellung von wasserdichten Membranen gemäß der vorliegenden Erfindung erfolgt zweckmäßig als Endlosware, wobei die einzelnen Schichten durch Kalandrieren und/oder Kaschieren, insbesondere durch Kaschieren, miteinander verbunden werden. Danach werden die Membranen beispielsweise auf Rollen aufgerollt.

Das Haftmittel kann bei der Herstellung zweckmäßig durch Schlitzdüsenextrusion, im Pulverstreuverfahren, durch Schmelzkalandrieren oder Sprühkaschierung, insbesondere mit Hilfe eines Pulverstreuverfahrens, auf die Schottschicht aufgebracht werden. Dabei weist das Haftmittel vorzugsweise eine Zusammensetzung und eine Standfestigkeit auf, die mit den Temperaturen der Herstellung der wasserdichten Membran 1 verträglich ist.

Anlagen zur Herstellung erfindungsgemäßer Membranen sind dem Fachmann ohne Weiteres geläufig. Der Vollständigkeit halber wird hier auf die in der EP 2 299 005 beschriebenen Apparaturen verwiesen, die im Rahmen der vorliegenden Erfindung für die Herstellung von Membranen verwendet werden können.

Mit den erfindungsgemäßen Membranen ist es möglich Fundamente und andere Bauwerke hinterlaufsicher abzudichten und dabei zum Beton ohne weitere Vorbehandlungsmaßnahmen eine gute Verbindung aufzubauen. Die beschriebenen Funktionsschichten der Membranbahnen sind vor dem Kontakt mit flüssigem Beton inert und schützen so die Bahn vor frühzeitiger Alterung und ermöglichen das Arbeiten auf der Abdichtung. Bei der Betonierung, d.h. wenn die Membran mit flüssigem Beton in Kontakt kommt, entwickelt die Funktionsschicht selbstklebende Wirkung und ermöglicht damit eine gute Haftung am Beton. Gleichzeitig wirkt die Funktionsschicht als Dichtmasse und führt dazu, dass die Abdichtung hinterlaufsicher ist.

Bei einer zweilagigen Konstruktion der Membran besteht zusätzlich der Vorteil, dass deren Aufbau deutlich einfacher ist und dass das Aufbringen eines Haftmittels beispielsweise in Form eines Heißschmelzklebstoffes entfallen kann. Die für die Hinterläufigkeit erforderliche Dichtmasse bildet sich in diesem Fall *in-situ* beim Betonieren.

**Bezugszeichenliste**

1 Wasserdichte Membran
2 Schottschicht
3 Kontaktschicht
4 Haftmittelschicht
5 Schicht, umfassend ein thermoplastisches Polymer

**Patentansprüche**

1. Wasserdichte Membran (1) umfassend:

   eine Schottschicht (2),
   eine Funktionsschicht (3), wobei die Funktionsschicht ein thermoplastisches Polymer, das unter dem Einfluss eines stark alkalischen Mediums mit einem pH Wert von 9 bis 14 seine Konsistenz ändert und in Form eines thermoplastischen Copolyester vorliegt und ein Haftmittel enthält, wobei das Haftmittel zusammen mit dem thermoplastischen Polymer die Funktionsschicht (3) bildet, wobei das Haftmittel mit dem thermoplastischen Polymer derart vermischt ist, dass es in dieser Vermischung keine selbstklebende Wirkung aufweist **dadurch gekennzeichnet, dass** das Haftmittel in der Funktionsschicht einen Acrylatklebstoff, einen Polyurethanklebstoff oder einen silanterminierten Polymerklebstoff umfasst und dass die Schottschicht (2) ausgewählt aus Materialien aus der Gruppe bestehend aus Polyethylen mit hoher Dichte (HDPE), Polyethylen mit mittlerer Dichte (MDPE), Polyethylen mit niedriger Dichte (LDPE), Polyethylen (PE), Polyethylenterephthalat (PET), Polystyrol (PS), Polyvinylchlorid (PVC), Polyamiden (PA), Ethylen/Vinylacetat-Copolymer (EVA), chlorsulfoniertes Polyethylen, thermoplastische Elastomere auf Olefinbasis (TPE-O, TPO), Ethylen-Propylen-Dien-Kautschuk (EPDM) und Mischungen davon.

2. Wasserdichte Membran gemäß Anspruch 1, **dadurch gekennzeichnet, dass** die Funktionsschicht (3) in Form einer Folie aus dem thermoplastischen Polymer und dem Haftmittel oder in Form einer Beschichtung aus dem thermoplastischen Polymer und dem Haftmittel vorliegt.

3. Wasserdichte Membran gemäß einem der vorstehenden Ansprüche, **dadurch gekennzeichnet, dass** die Funktionsschicht (3) zusätzlich ein weiteres thermoplastisches Polymerenthält.

4. Wasserdichte Membran gemäß einem der vorstehenden Ansprüche, **dadurch gekennzeichnet, dass** die Funktionsschicht (3) in Form eines geschäumten Materials vorliegt.

5. Wasserdichte Membran gemäß einem der vorstehenden Ansprüche, **dadurch gekennzeichnet, dass** die Funktionsschicht (3) zusätzlich Betonbestandteile enthält.

6. Wasserdichte Membran gemäß einem der vorstehenden Ansprüche, **dadurch gekennzeichnet, dass** die Schottschicht (2) eine thermoplastische Schicht umfasst.

7. Wasserdichte Membran gemäß Anspruch 2 oder einem davon abhängigen Anspruch, **dadurch gekennzeichnet, dass** die Funktionsschicht (3) in Form einer Folie eine Dicke von 0,05 bis 1,0 mm aufweist.

8. Wasserdichte Membran gemäß Anspruch 2 oder einem davon abhängigen Anspruch, **dadurch gekennzeichnet, dass** die Funktionsschicht (3) in Form einer Beschichtung mit einem Auftragsgewicht im Bereich von 10 bis 500 g/m$^2$ aufgetragen wird.

9. Verfahren zur Abdichtung von Untergründen umfassend die Schritte:

   i) Aufbringen einer wasserdichten Membran (1) nach einem der Ansprüche 1 bis 8 auf einen Untergrund, wobei die Funktionsschicht (3) der wasserdichten Membran (1) entgegen dem Untergrund gerichtet ist,
   ii) Aufbringen von flüssigem Beton auf die Funktionsschicht (3) der wasserdichten Membran (1).

10. Verfahren zur Herstellung einer wasserdichten Membran (1) gemäß einem der Ansprüche 1 bis 8, **dadurch gekennzeichnet, dass** eine Funktionsschicht (3) gemäß den Vorgaben aus Anspruch 1 enthaltend ein thermoplastisches Polymer und ein Haftmittel, auf eine Schottschicht (2) aufgebracht wird.

11. Verfahren nach Anspruch 10, **dadurch gekennzeichnet, dass** die Funktionsschicht (3) in Form einer Folie durch Laminierung oder Kaschierung auf der Schottschicht (2), oder dass die Funktionsschicht (3) in Form einer Beschichtung durch Schmelzdüsenextrusion, Schmelzkalandrierung, Pulverstreuverfahren oder Sprühkaschierung auf die Schottschicht (2) aufgebracht wird.

12. Verwendung einer Membran (1) gemäß einem der Ansprüche 1 bis 8 zum Abdichten eines Bauwerks aus dem Hoch- und Tiefbau.

**13.** Verwendung nach Anspruch 12, **dadurch gekennzeichnet, dass** das Bauwerk aus dem Hoch- und Tiefbau ein Gebäude, eine Garage, ein Tunnel, eine Deponie, ein Wasserrückhaltebecken, ein Deich oder ein Element für den Fertigteilebau, ist.

**14.** Verwendung nach Anspruch 12 oder 13, **dadurch gekennzeichnet, dass** die Membran (1) durch Aufbringen von flüssigem Beton mit dem Bauwerk verbunden wird.

**Claims**

**1.** Waterproof membrane (1) comprising:

an impervious layer (2),
a functional layer (3), where the functional layer comprises a thermoplastic polymer which changes consistency under the influence of a strongly alkaline medium having a pH of 9 to 14 and is present in the form of a thermoplastic copolyester, and a bonding agent,
where the bonding agent together with the thermoplastic polymer forms the functional layer (3), where the bonding agent is mixed with the thermoplastic polymer such that in this mixture it does not exhibit any self-adhesive effect, **characterized in that** the bonding agent in the functional layer comprises an acrylate adhesive, a polyurethane adhesive or a silane-terminated polymer adhesive and **in that** the impervious layer (2) is selected from materials from the group consisting of high-density polyethylene (HDPE), medium-density polyethylene (MDPE), low-density polyethylene (LDPE), polyethylene (PE), polyethylene teraphthalate (PET), polystyrene (PS), polyvinyl chloride (PVC), polyamides (PA), ethylene/vinyl acetate copolymer (EVA), chlorosulfonated polyethylene, thermoplastic elastomers based on olefin (TPE-O, TPO), ethylene-propylene-diene rubber (EPDM) and mixtures thereof.

**2.** Waterproof membrane according to Claim 1, **characterized in that** the functional layer (3) is in the form of a sheet composed of the thermoplastic polymer and the bonding agent or in the form of a coating composed of the thermoplastic polymer and the bonding agent.

**3.** Waterproof membrane according to either of the preceding claims, **characterized in that** the functional layer (3) further comprises a further thermoplastic polymer.

**4.** Waterproof membrane according to any of the preceding claims, **characterized in that** the functional layer (3) is in the form of a foamed material.

**5.** Waterproof membrane according to any of the preceding claims, **characterized in that** the functional layer (3) further comprises concrete constituents.

**6.** Waterproof membrane according to any of the preceding claims, **characterized in that** the impervious layer (2) comprises a thermoplastic layer.

**7.** Waterproof membrane according to Claim 2 or any claim dependent thereon, **characterized in that** the functional layer (3) in the form of a sheet has a thickness of 0.05 to 1.0 mm.

**8.** Waterproof membrane according to Claim 2 or any claim dependent thereon, **characterized in that** the functional layer (3) in the form of a coating is applied with a coat weight in the range from 10 to 500 $g/m^2$.

**9.** Method for sealing substrates, comprising the steps of:

i) applying a waterproof membrane (1) according to any of Claims 1 to 8 to a substrate, the functional layer (3) of the waterproof membrane (1) facing the substrate,
ii) applying liquid concrete to the functional layer (3) of the waterproof membrane (1).

**10.** Method for producing a waterproof membrane (1) according to any of Claims 1 to 8, **characterized in that** a functional layer (3) as specified in Claim 1, comprising a thermoplastic polymer and a bonding agent, is applied to an impervious layer (2).

**11.** Method according to Claim 10, **characterized in that** the functional layer (3) in the form of a sheet is applied by lamination on the impervious layer (2), or **in that** the functional layer (3) in the form of a coating is applied to the impervious layer (2) by melt die extrusion, melt calendering, powder scattering methods or spray lamination.

**12.** Use of a membrane (1) according to any of Claims 1 to 8 for sealing an edifice in construction or civil engineering.

**13.** Use according to Claim 12, **characterized in that** the edifice in construction or civil engineering is a building, a garage, a tunnel, a landfill, a water retention pond, a dyke or an element for prefabricatedunit construction.

**14.** Use according to Claim 12 or 13, **characterized in that** the membrane (1) is joined to the edifice by application of liquid concrete.

**Revendications**

**1.** Membrane imperméable à l'eau (1) comprenant :

une couche étanche (2),
une couche fonctionnelle (3), la couche fonctionnelle contenant un polymère thermoplastique qui modifie sa consistance sous l'influence d'un milieu fortement alcalin doté d'une valeur de pH de 9 à 14 et est présent sous forme d'un copolyester thermoplastique et contient un adhésif, l'adhésif formant, ensemble avec le polymère thermoplastique, la couche fonctionnelle (3), l'adhésif étant mélangé avec le polymère thermoplastique de telle manière qu'il ne présente aucun effet autocollant dans ce mélange,
**caractérisée en ce que** l'adhésif dans la couche fonctionnelle comprend un adhésif de type acrylate, un adhésif de type polyuréthane ou un adhésif de type polymère terminé par un silane et
**en ce que** la couche étanche (2) est choisie parmi des matériaux du groupe constitué par un polyéthylène haute densité (HDPE), un polyéthylène moyenne densité (MDPE), un polyéthylène basse densité (LDPE), un polyéthylène (PE), un poly(téréphtalate d'éthylène) (PET), un polystyrène (PS), un poly(chlorure de vinyle) (PVC), des polyamides (PA), un copolymère d'éthylène/acétate de vinyle (EVA), un polyéthylène chlorosulfoné, des élastomères thermoplastiques à base d'oléfine (TPE-O, TPO), un caoutchouc d'éthylène-propylène-diène (EPDM) et
des mélanges correspondants.

**2.** Membrane imperméable à l'eau selon la revendication 1, **caractérisée en ce que** la couche fonctionnelle (3) est présente sous forme d'une feuille composée du polymère thermoplastique et de l'adhésif ou sous forme d'un revêtement composé du polymère thermoplastique et de l'adhésif.

**3.** Membrane imperméable à l'eau selon l'une quelconque des revendications précédentes, **caractérisée en ce que** la couche fonctionnelle (3) contient de plus un autre polymère thermoplastique.

**4.** Membrane imperméable à l'eau selon l'une quelconque des revendications précédentes, **caractérisée en ce que** la couche fonctionnelle (3) est présente sous forme d'un matériau moussé.

**5.** Membrane imperméable à l'eau selon l'une quelconque des revendications précédentes, **caractérisée en ce que** la couche fonctionnelle (3) contient de plus des ingrédients de béton.

**6.** Membrane imperméable à l'eau selon l'une quelconque des revendications précédentes, **caractérisée en ce que** la couche étanche (2) comprend une couche thermoplastique.

**7.** Membrane imperméable à l'eau selon la revendication 2 ou selon une revendication dépendant de celle-ci, **caractérisée en ce que** la couche fonctionnelle (3) est présente sous forme d'une feuille d'une épaisseur de 0,05 à 1,0 mm.

**8.** Membrane imperméable à l'eau selon la revendication 2 ou selon une revendication dépendant de celle-ci, **caractérisée en ce que** la couche fonctionnelle (3) est appliquée sous forme d'un revêtement avec un poids appliqué dans la plage de 10 à 500 g/m$^2$ .

**9.** Procédé pour l'étanchéification de bases comprenant les étapes de :

i) application d'une membrane imperméable à l'eau (1) selon l'une quelconque des revendications 1 à 8 sur un substrat, la couche fonctionnelle (3) de la membrane imperméable à l'eau (1) étant orientée à l'opposé du substrat,
ii) application de béton liquide sur la couche fonctionnelle (3) de la membrane imperméable à l'eau (1).

10. Procédé pour la préparation d'une membrane imperméable à l'eau (1) selon l'une quelconque des revendications 1 à 8, **caractérisé en ce qu'**une couche fonctionnelle (3) selon les dispositions de la revendication 1 contenant un polymère thermoplastique et un adhésif, est appliquée sur une couche étanche (2).

11. Procédé selon la revendication 10, **caractérisé en ce que** la couche fonctionnelle (3) est appliquée sous forme d'une feuille par stratification ou contrecollage sur la couche étanche (2), ou **en ce que** la couche fonctionnelle (3) est appliquée sous forme d'un revêtement par extrusion à l'état fondu, par calandrage à l'état fondu, par un procédé de pulvérisation de poudre ou par contrecollage par pulvérisation sur la couche étanche (2).

12. Utilisation d'une membrane (1) selon l'une quelconque des revendications 1 à 8, pour l'étanchéification d'une construction du bâtiment et du génie civil.

13. Utilisation selon la revendication 12, **caractérisée en ce que** la construction du bâtiment et du génie civil est un bâtiment, un garage, un tunnel, une décharge, un bassin de rétention d'eau, une digue ou un élément pour la préfabrication.

14. Utilisation selon la revendication 12 ou 13, **caractérisée en ce que** la membrane (1) est reliée à la construction par l'application de béton liquide.

Fig. 1A und Fig. 1B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4065924 A
- US 5313848 A
- US 5496615 A
- EP 2299005 A1
- WO 2011041263 A1
- DE 102007026166 A1
- EP 2299005 A

**In der Beschreibung aufgeführte Nicht-Patentliteratur**

- **CD RÖMPP.** Chemie Lexikon. Georg Thieme Verlag, 1995